# EUROPÄISCHE PATENTSCHRIFT

(11) **EP 3 176 438 B1**
(45) Veröffentlichungstag und Bekanntmachung des Hinweises auf die Patenterteilung: **08.04.2020**
(21) Anmeldenummer: 15197822.8
(22) Anmeldetag: 03.12.2015
(51) Int. Cl.: F04D 13/06, F04D 29/046, F04D 29/62, F16C 23/04, F16C 17/08, F16C 35/02

(54) **PUMPENAGGREGAT**
PUMP UNIT
GROUPE MOTOPOMPE

(43) Veröffentlichungstag der Anmeldung: 07.06.2017
(73) Patentinhaber: Grundfos Holding A/S, 8850 Bjerringbro (DK)
(72) Erfinder: BLASER, Georg, 71679 Asperg (DE)
(74) Vertreter: Patentanwälte Vollmann Hemmer Lindfeld Partnerschaft mbB

(56) Entgegenhaltungen:
- EP-A1- 1 398 511
- EP-A2- 1 593 852
- DE-A1- 2 246 418
- DE-A1-102004 008 158
- DE-A1-102007 054 313

## Beschreibung

Die Erfindung betrifft ein elektrisches Pumpenaggregat, bei welchem der Rotor des elektrischen Antriebsmotors zentral auf einer Lagerkugel gelagert ist.

Ein solches Pumpenaggregat ist beispielsweise aus DE 10 2004 008 158 A1 bekannt. Bei dem Pumpenaggregat weist der magnetische Rotor am Außenumfang eine sphärische Form auf und der umgebende Stator ist entsprechend geformt, wobei Rotor und Stator durch eine sphärische Trennkalotte voneinander getrennt sind. Der Rotor ist zentral auf einer Lagerkugel gelagert.

DE 10 2004 008 158 A1 offenbart eine Befestigung der Lagerkugel auf einem Lagerhalter, wobei Befestigungselemente die Lagerkugel durchgreifen oder der Lagerhalter selber die Kugel am Außenumfang hält. Eine ähnliche Befestigung ist aus EP 1 593 852 A2 bekannt. EP 1 398 511 A1 offenbart eine Befestigung der Lagerkugel, bei welcher sich ebenfalls ein Befestigungselement durch die Kugel hindurch erstreckt. Alternativ sind Lösungen bekannt, bei welchen die Lagerkugel nicht am Lagerhalter befestigt ist, sondern lediglich im Betrieb des Pumpenaggregates durch Andruckkräfte an den Lagerhalter gedrückt werden. Eine solche Lösung ist aus DE 2 246 418 A1 bekannt.

Wenn die Lagerkugel aus einem geeigneten Lagermaterial, beispielsweise Hartmetall, gefertigt ist, ist es problematisch, die Lagerkugel im Rotorraum an einer aus Kunststoff ausgebildeten Trennkalotte zu fixieren.

In einem solchen Motor muss die Lagerkugel aus einem geeigneten Lagermaterial, beispielsweise Hartmetall, gefertigt sein. Es stellt sich das Problem, die Lagerkugel im Rotorraum an der aus Kunststoff ausgebildeten Trennkalotte zu fixieren.

Im Hinblick auf diese Problematik ist es Aufgabe der Erfindung, ein solches elektrisches Pumpenaggregat dahingehend zu verbessern, dass eine Lagerkugel auf einfache Weise sicher an der aus Kunststoff ausgebildeten Trennkalotte fixiert werden kann.

Diese Aufgabe wird durch ein elektrisches Pumpenaggregat mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße elektrische Pumpenaggregat weist einen elektrischen Antriebsmotor auf, welcher zumindest ein Laufrad drehend antreibt. Der elektrische Antriebsmotor weist einen Stator und einen Rotor auf, wobei der Rotor mit dem Laufrad drehfest zu einer Rotorbaugruppe verbunden ist. Der Rotor ist vorzugsweise permanentmagnetisch ausgestaltet und im Stator sind in bekannter Weise Statorspulen angeordnet, welche magnetische Felder erzeugen, die den Rotor in Rotation versetzen. Der Antriebsmotor des elektrischen Pumpenaggregates ist als nasslaufender elektrischer Antriebsmotor ausgebildet. Das heißt der Rotor rotiert in der von dem Laufrad zu fördernden Flüssigkeit. Dazu sind der Stator und der Rotor bzw. der Rotorraum, in welchem der Rotor rotiert, durch eine sphärische Trennkalotte aus Kunststoff getrennt. Der Rotor weist an seinem Außenumfang vorzugsweise eine Form auf, welche mit der sphärischen Form der Trennkalotte korrespondiert. Ferner ist der Rotor zentral auf einer Lagerkugel drehbar gelagert. Dabei liegt der Mittelpunkt der Lagerkugel zweckmäßigerweise auf dem Mittelpunkt, um welchen die sphärische Form der Trennkalotte und auch bevorzugt die äußere Form des Rotors gekrümmt ist. Eine solche kugelförmige Lagerung ermöglicht nicht nur eine Rotation des Rotors, sondern auch eine leichte Pendelbewegung des Rotors um Kippachsen, welche sich normal zur Drehachse des Rotors erstrecken. Beim Antrieb durch Bestromung der Statorspulen richtet sich der Rotor durch die Magnetfelder selbsttätig in einer zentrierten Lage aus.

Erfindungsgemäß ist die Lagerkugel auf einem Lagerträger befestigt, wobei der Lagerträger sich von der Trennkalotte weg erstreckt, insbesondere in radialer Richtung zur Mitte des Rotorraums hin erstreckt, so dass die Lagerkugel in der Mitte des Rotorraumes in der vorangehend beschriebenen Weise positioniert ist. Dazu liegt die Lagerkugel auf dem Lagerträger auf. Das heißt der Lagerträger gibt die definierte Position der Lagerkugel vor. Dies erleichtert die Montage. An dem Lagerträger ist die Lagerkugel durch ein Befestigungselement fixiert. Das Befestigungselement umgreift dazu die Lagerkugel an deren Umfang und übergreift den Lagerträger. So kann das Befestigungselement auf den Lagerträger aufgestülpt bzw. aufgesetzt werden. Das Umgreifen der Lagerkugel durch das Befestigungselement erfolgt derart, dass die Lagerkugel ein sich über das Befestigungselement hinaus erstreckendes freies Kugelsegment aufweist, welches mit einem korrespondierenden Gegenlager an dem Rotor in Anlage ist. So ist das Befestigungselement außerhalb der eigentlichen Lagerung gelegen und behindert die Beweglichkeit des Rotors auf der Lagerkugel nicht.

Die Verwendung eines die Lagerkugel an deren Umfang umgreifenden Befestigungselementes hat den Vorteil, dass die Lagerkugel zu ihrer Befestigung nicht weiter bearbeitet werden muss. Ferner kann so eine rein mechanische Fixierung erreicht werden. Dadurch, dass der Lagerträger von dem Befestigungselement von außen übergriffen wird, ist es möglich, den Lagerträger vollständig geschlossen auszubilden, so dass im Bereich des Lagerträgers keine Öffnungen in der Trennkalotte vorgesehen werden müssen, welche gegebenenfalls zusätzlich abgedichtet werden müssten. Ferner ist eine sehr einfache Montage möglich, da das Befestigungselement einfach über den Lagerträger übergestülpt werden kann.

Vorzugsweise ist das Befestigungselement als Befestigungshülse ausgebildet, welche die Lagerkugel und den Lagerträger umfänglich umgreift. Dabei weist die Befestigungshülse vorzugsweise eine rotationssymmetrische Gestalt auf. Weiter bevorzugt hat die Befestigungshülse eine geschlossene Umfangswandung und weist lediglich an ihren zwei entgegengesetzten Axialenden jeweils eine Öffnung auf. Die Erstreckungsrichtung des Lagerträgers entspricht vorzugsweise der Drehachse des Rotors, und die Befestigungshülse erstreckt sich vorzugsweise ebenfalls entlang dieser Drehachse des Rotors und der Längsachse des Lagerträgers. Ein erstes Axialende der Befestigungshülse weist vorzugsweise eine Öffnung auf, welche so dimensioniert ist, dass sich die Lagerkugel zumindest mit einem Kugelsegment aus dieser Öffnung nach außen erstrecken kann, so dass ein freies Kugelsegment als Lagerfläche verbleibt. Am entgegengesetzten zweiten Axialende weist die Befestigungshülse eine Öffnung auf, welche so dimensioniert ist, dass der Lagerträger durch diese Öffnung in das Innere der Lagerhülse eingreifen kann. Dabei ist die Innenkontur der Lagerhülse zumindest in dem an dieses zweite Axialende angrenzenden Bereich so gestaltet, dass sie im Wesentlichen der Außenkontur des Lagerträgers entspricht, so dass in diesem Bereich eine flächige Anlage zwischen Außenumfangsfläche des Lagerträgers und Innenumfangsfläche der Befestigungshülse erreicht werden kann. Besonders bevorzugt weist die Befestigungshülse angrenzend an dieses zweite Axialende, welches der Lagerkugel abgewandt ist, eine im Wesentlichen zylindrische Innenkontur auf.

Der Lagerträger ist vorzugsweise wie die Trennkalotte aus Kunststoff gefertigt und besonders bevorzugt einstückig mit der Trennkalotte aus Kunststoff ausgebildet. Dies ermöglicht eine einfache Fertigung als Spritzgussteil, und vermeidet zusätzliche Montageschritte zur Befestigung des Lagerträgers an der Trennkalotte. Darüber hinaus kann auf diese Weise sehr einfach eine ausreichende Dichtigkeit der Trennkalotte auch im Bereich der Befestigung des Lagerträgers aus realisiert werden. Der Lagerträger kann in seinem Inneren hohl oder auch massiv aus Kunststoff ausgebildet sein. Bevorzugt ist er derart steif, dass er von dem Befestigungselement bzw. der Befestigungshülse von außen aufgebrachte Druckkräfte aufnehmen kann.

Weiter bevorzugt weist der Lagerträger an seinem der Trennkalotte abgewandten Axialende eine vorzugsweise konkave Anlagefläche auf, an welcher die Lagerkugel anliegt. Ist die Anlagefläche konkav ausgebildet, weist die Anlagefläche vorzugsweise einen Krümmungsradius auf, welcher dem Krümmungsradius der Lagerkugel entspricht, so dass eine flächige Anlage zwischen Lagerkugel und Anlagefläche erreicht wird. Die Anlagefläche ermöglicht es, die auf die Lagerkugel wirkenden Druckkräfte auf den Lagerträger zu übertragen. Durch eine flächige Anlage zwischen Lagerkugel und Anlagefläche kann darüber hinaus bevorzugt aufgrund der zwischen Lagerkugel und Anlagefläche herrschenden Reibung die Lagerkugel an dem Lagerträger gegen Verdrehen oder Verrutschen fixiert werden. Dazu kann die Lagerkugel vorzugsweise durch das Befestigungselement an die Anlagefläche angepresst werden.

Das Befestigungselement ist vorzugsweise aus Metall und weiter bevorzugt aus rostfreiem Edelstahl gefertigt. Während der Lagerträger, wie oben beschrieben, in erster Linie Druckkräfte aufnehmen muss, kann ein Befestigungselement aus Metall, insbesondere in Form einer Befestigungshülse, besonders bevorzugt auftretende Zugkräfte aufnehmen. Dies ergibt sich insbesondere dann, wenn das Befestigungselement bzw. die Befestigungshülse klemmend auf dem Außenumfang des Lagerträgers befestigt wird. Ein Befestigungselement aus Metall lässt sich darüber hinaus zur Befestigung auf dem Lagerträger plastisch verformen, so dass eine einfache mechanische Befestigung erreicht werden kann. Ferner lässt sich ein solches Befestigungselement, insbesondere in Form einer Befestigungshülse, auf einfache Weise in ausreichender Präzision fertigen. Bevorzugt ist das metallische Befestigungselement durch Umformen aus einem Blech hergestellt. So kann eine Befestigungshülse beispielsweise als Tiefziehteil aus einem Blech gefertigt werden. Das Loch, durch welches sich die Lagerkugel, wie oben beschrieben, nach außen erstreckt, wird dabei bevorzugt in das Blechteil eingestanzt. Dies kann vor oder nach dem Umformen oder auch zwischen zwei Umformschritten erfolgen. Das Loch wird bevorzugt so ausgebildet bzw. ausgestanzt, dass ein beim Stanzvorgang entstehender Grat an einer Kante des Loches gelegen ist, welche nicht an die Lagerkugel angrenzt. So kann im Umfang der Lagerkugel das Befestigungselement bzw. die Befestigungshülse genau kalibriert werden, um eine definierte Anlage an der Lagerkugel zu deren Fixierung zu erreichen.

Eine metallische Befestigungshülse bzw. ein metallisches Befestigungselement, welches in der vorangehend beschriebenen Weise aus Blech gefertigt ist, weist weiter bevorzugt eine Wandstärke zwischen 0,25 und 1 mm auf.

Das Befestigungselement ist an dem Lagerträger vorzugsweise kraftschlüssig und/oder formschlüssig fixiert. Dies ermöglicht eine einfache Montage des Befestigungselementes an dem Lagerträger, da keine thermischen Fügevorgänge oder Klebprozesse erforderlich sind. Der Kraftschluss und/oder Formschluss wird vielmehr bevorzugt durch entsprechende elastische und/oder plastische Verformung insbesondere des Befestigungselementes erreicht. Alternativ oder zusätzlich kann auch der Lagerträger eine Verformung beim Aufsetzen des Befestigungselementes erfahren.

Besonders bevorzugt ist das Befestigungselement auf dem Außenumfang des Lagerträgers aufgepresst. Das heißt das Befestigungselement wird auf den Außenumfang des Lagerträgers aufgesetzt, wobei es klemmend am Außenumfang des Lagerträgers zur Anlage kommt. Dies kann dadurch geschehen, dass das Befestigungselement, insbesondere wenn es als Befestigungshülse ausgebildet ist, beim Aufsetzen auf den Lagerträger elastisch geweitet wird, so dass in dem Befestigungselement Zugspannungen erzeugt werden, welche auf die Außenumfangsfläche des Lagerträgers wirkende Druckkräfte verursachen, wobei diese Druckkräfte das Befestigungselement an dem Lagerträger kraftschlüssig fixieren. Alternativ kann das Befestigungselement, insbesondere wenn es aus Metall gefertigt ist, beim Aufsetzen auf den Lagerträger durch geeignete Weise plastisch verformt werden, d.h. radial nach innen gedrückt werden, um eine auf den Lagerträger wirkende Andruckkraft und/oder ein Umgreifen von an dem Lagerträger ausgebildeten Hinterschneidungen zu erreichen. Auf diese Weise kann das Befestigungselement dann kraft- und/oder formschlüssig an dem Lagerträger fixiert werden. Dabei wird das Befestigungselement an dem Lagerträger bevorzugt so fixiert, dass in axialer Richtung eine Andruckkraft zwischen der Lagerkugel und der oben beschriebenen Anlagefläche erzeugt wird, so dass die Lagerkugel an der Anlagefläche spielfrei gehalten wird bzw. zwischen dem Befestigungselement und der Anlagefläche spielfrei fixiert wird. Durch Kalibrierung und/oder Umformung des Befestigungselementes beim Aufsetzen auf den Lagerträger können darüber hinaus Fertigungstoleranzen bei der Fertigung des Befestigungselementes und/oder des Lagerträgers ausgeglichen werden, um eine feste Fixierung der Lagerkugel zu erreichen.

Durch das Aufpressen des Befestigungselementes auf den Lagerträger wird insbesondere bevorzugt eine flächige Anlage zwischen der Innenumfangsfläche des Befestigungselementes und dem Außenumfang des Lagerträgers realisiert, wodurch eine feste kraftschlüssige Verbindung realisiert werden kann. Die Außenkontur des Lagerträgers ist bevorzugt zylindrisch ausgebildet, kann jedoch auch Hinterschneidungen aufweisen, das heißt sich in Abschnitten ausgehend von dem freien Ende des Lagerträgers zur Trennkalotte hin verjüngen, wobei diese verjüngten Bereiche durch das Befestigungselement um- bzw. hintergriffen werden können.

Weiter bevorzugt umgreift das Befestigungselement, insbesondere wenn es als Befestigungshülse ausgebildet ist, den Äquator der Lagerkugel. Hierzu kann das Befestigungselement in dem Bereich, in dem die Lagerkugel gehalten wird, einen Innendurchmesser aufweisen, welcher geringfügig kleiner als der Außendurchmesser der Lagerkugel an ihrem Äquator ist. So kann eine kraftschlüssige Verbindung bzw. eine klemmende Verbindung zwischen dem Innenumfang der Befestigungshülse und dem Außenumfang der Lagerkugel erreicht werden. Entsprechend dimensionierte Innenumfangsbereiche der Befestigungshülse grenzen bevorzugt an die Öffnung, durch welche sich die Lagerkugel nach außen erstreckt an und erstrecken sich über eine gewisse axiale Länge, so dass beim Aufsetzen auf den Lagerträger Fertigungstoleranzen derart ausgeglichen werden können, dass die Lagerkugel zum einen sicher in der Befestigungshülse fixiert und zum anderen an der Anlagefläche des Lagerträgers in Anlage gehalten werden kann. Alternativ oder zusätzlich kann das Befestigungselement, insbesondere in Form einer Lagerhülse, den Äquator übergreifen. Hierzu kann die Lagerhülse an ihrem freien Ende eine Öffnung aufweisen, deren Innendurchmesser kleiner als der Außendurchmesser der Lagerkugel am Äquator ist. So kann die Lagerkugel von innen in die Befestigungshülse eingesetzt werden und im Inneren der Befestigungshülse im Umfangsbereich der Öffnung zur Anlage kommen. Besonders bevorzugt wird die Lagerkugel auf diese Weise an ihrem Äquator übergriffen, während gleichzeitig die Lagerkugel mit ihrem Äquator klemmend an einer Innenumfangsfläche der Befestigungshülse zur Anlage kommt. Dazu erweitert sich ausgehend von der Öffnung am freien Ende der Befestigungshülse deren Innendurchmesser so, dass sich an den den Äquator übergreifenden Teil der Befestigungshülse eine vorzugsweise zylindrische Innenumfangsfläche anschließt, welche einen Innendurchmesser aufweist, welcher geringfügig kleiner ist als der Durchmesser am Äquator der Lagerkugel. Durch die Klemmung der Lagerkugel am Außenumfang wird die Lagerkugel drehfest in der Lagerhülse fixiert. Ein Kugelsegment der Lagerkugel erstreckt sich durch die Öffnung hindurch nach außen und bildet die eigentliche Lagerfläche.

Gemäß einer weiteren bevorzugten Ausführungsform weist der Lagerträger eine Anlageschulter auf, an welcher das Befestigungselement mit seinem der Lagerkugel abgewandten Axialende anliegt. Das der Lagerkugel abgewandte Axialende des Befestigungselementes, welches auch bei dieser Ausgestaltung vorzugsweise als Befestigungshülse ausgebildet ist, kann weiter bevorzugt einen umgebogenen Rand aufweisen, so dass eine bevorzugt ringförmige Anlagefläche gebildet wird, welche an der Anlageschulter zur Anlage kommt. Auf diese Weise kann eine genaue axiale Positionierung des Befestigungselementes auf dem Lagerträger in dessen Längsrichtung erreicht werden.

Gemäß einer weiteren bevorzugten Ausführungsform ist die Trennkalotte einstückig mit zumindest einem Teil eines Statorgehäuses, welches den Stator des elektrischen Antriebsmotors umgibt, ausgebildet. An diesem Statorgehäuse ist vorzugsweise an einer zur Verbindung mit einem Pumpengehäuse vorgesehenen Stirnseite eine Dichtung zur Abdichtung der Schnittstelle zwischen Statorgehäuse und Pumpengehäuse angeordnet. Die Dichtung liegt vorzugsweise am Außenumfang eines ringförmigen Vorsprunges. Der ringförmige Vorsprung definiert an seiner Stirnkante bevorzugt das Axialende des Statorgehäuses und des Rotorraumes mit dem darin angeordneten Rotor bzw. seiner darin angeordneten Rotorbaugruppe. Dies hat den Vorteil, dass bei abgenommenen Pumpengehäuse das Statorgehäuse auf diesen ringförmigen Vorsprung aufgestellt werden kann, ohne dass die Dichtung und/oder der Rotor bzw. das Laufrad beschädigt werden.

Gegenstand der Erfindung ist ferner eine speziell ausgestaltete Rotorbaugruppe bzw. eine spezielle Form des Rotors des elektrischen Pumpenaggregates, wobei diese Ausgestaltung der Rotorbaugruppe bzw. des Rotors bevorzugt zusammen mit der vorangehend beschriebenen Ausgestaltung des elektrischen Pumpenaggregates zum Einsatz kommt, jedoch auch unabhängig von der beschriebenen Befestigung der Lagerkugel zum Einsatz kommen kann. Wesentlich für die Rotorbaugruppe ist, dass deren Rotor als Rotor eines Kugelmotors ausgebildet ist, das heißt eines Motors, welcher eine sphärische Trennkalotte zwischen Rotorraum und Stator aufweist. Der Rotor weist vorzugsweise an seinem Außenumfang ebenfalls eine sphärische Form bzw. Form eines Kugelabschnittes auf. Der Rotor ist ferner vorzugsweise zur zentralen Lagerung auf einer Lagerkugel geeignet, wie sie beispielsweise vorangehend beschrieben wurde.

Der Rotor ist vorzugsweise aus einem Kunststoffmaterial mit eingebetteten Magnetpartikeln, beispielsweise Ferritpartikeln gefertigt ist. Ein solcher Rotor kann als Spritzgussteil gefertigt werden, wobei die Magnetpartikel während oder nach dem Spritzguss durch geeignete Magnetfelder in definierter Weise permanent magnetisiert werden können. Dies ermöglicht eine kostengünstige Fertigung des Rotors.

Weiter bevorzugt ist auch das Laufrad aus Kunststoff gefertigt und bildet weiter bevorzugt gemeinsam mit dem Rotor die vorangehend beschriebene Rotorbaugruppe. Das Laufrad aus Kunststoff kann ebenfalls vorzugsweise als Spritzgussteil gefertigt sein.

Besonders bevorzugt sind das Laufrad und der Rotor durch eine Rastverbindung zu einer Rotorbaugruppe miteinander verbunden. Hierzu können das Laufrad und/ der Rotor mit geeigneten Rastmitteln versehen sein, beispielsweise Rastzungen, welche ein Verrasten der Bauteile aneinander ermöglichen. So wird eine kraft- und/oder formschlüssige Verbindung zwischen Laufrad und Rotor erreicht. Die erforderlichen Rastelemente können sehr einfach in dem aus Kunststoff ausgebildeten Laufrad und/oder dem aus Kunststoff ausgebildeten Rotor realisiert werden. Die zweiteilige Ausgestaltung der Rotorbaugruppe hat den Vorteil, dass das Laufrad aus einem Kunststoff ohne Magnetpartikel gefertigt werden kann, was zum einen eine Ersparnis an Magnetpartikeln bewirkt und zum anderen eine präzisere Fertigung des Laufrades aus einem zur Ausbildung des Laufrades optimierten Kunststoffmaterial ermöglicht.

Gemäß einer weiteren bevorzugten Ausführungsform sind an dem Laufrad Eingriffselemente ausgebildet, welche mit korrespondierenden Gegen-Eingriffselementen an dem Rotor in Eingriff sind, zur Positionierung des Laufrades in seiner Winkellage relativ zu dem Rotor. Dies ist die Winkellage bezüglich der Drehachse des Rotors. Die Eingriffsmittel an dem Laufrad können als Vorsprünge und korrespondierend die Gegen-Eingriffsmittel an dem Rotor als Ausnehmungen oder umgekehrt ausgebildet sein. Die Eingriffselemente und Gegen-Eingriffselemente erleichtern die winkelgenaue Positionierung von Rotor und Laufrad zueinander.

Besonders bevorzugt sind die Anzahlen und die Positionierung der Eingriffselemente und Gegen-Eingriffselemente derart, dass sie eine vorgegebene Zahl von möglichen Winkelpositionen definieren, in welchen das Laufrad und der Rotor relativ zueinander positionierbar sind. Vorzugsweise entspricht dabei die Zahl der möglichen Winkelpositionen der Anzahl von Schaufeln des Laufrades. So können die Schaufeln des Laufrades genutzt werden, um das Laufrad zum Fügen mit dem Rotor in der richtigen Winkellage auszurichten, in welcher die Eingriffs- und Gegen-Eingriffselemente miteinander in Eingriff treten können. So wird die Montage vereinfacht.

In einer zentralen Ausnehmung des Rotors bzw. der Rotorbaugruppe ist vorzugsweise eine Lagerschale angeordnet, insbesondere eingepresst. So kann die Lagerschale auch im Laufrad fixiert sein, welches mit dem Rotor zu einer Rotorbaugruppe verbunden ist. Auf bzw. in der Lagerschale gleitet die Lagerkugel. Die Lagerschale weist dazu eine sphärische Lagerfläche auf, welche an den Außendurchmesser der Kugel angepasst ist. Das heißt der Krümmungsradius der Anlagefläche entspricht bevorzugt im Wesentlichen dem Krümmungsradius der Lagerkugel. Die Lageschale kann in bekannter Weise beispielsweise aus einem Kunststoffmaterial wie Polytetrafluorethylen gefertigt sein. Besonders bevorzugt ist die Lagerschale in die zentrale Ausnehmung eingepresst und nach dem Einpressen in die gewünschte Form gebracht worden. Durch diesen Montageablauf wird die Fertigung vereinfacht. Insbesondere können Fertigungstoleranzen beim Einpressen der Lagerschale in das Laufrad dadurch kompensiert werden, dass die Lagerschale erst nach dem Einpressen bearbeitet, insbesondere spannend bearbeitet wird.

Nachfolgend wird die Erfindung beispielhaft anhand der beigefügten Figuren beschrieben. In diesen zeigt:
- Fig. 1: eine Schnittansicht eines erfindungsgemäßen Pumpenaggregates,
- Fig. 2: eine Schnittansicht des Statorgehäuses sowie der Trennkalotte des Pumpenaggregates gemäß Fig. 1,
- Fig. 3: eine vergrößerte Schnittansicht der Rotorlagerung,
- Fig. 4: eine Schnittansicht der Rotorbaugruppe,
- Fig. 5: eine perspektivische Ansicht des Rotors,
- Fig. 6: eine perspektivische Ansicht des Laufrades, und

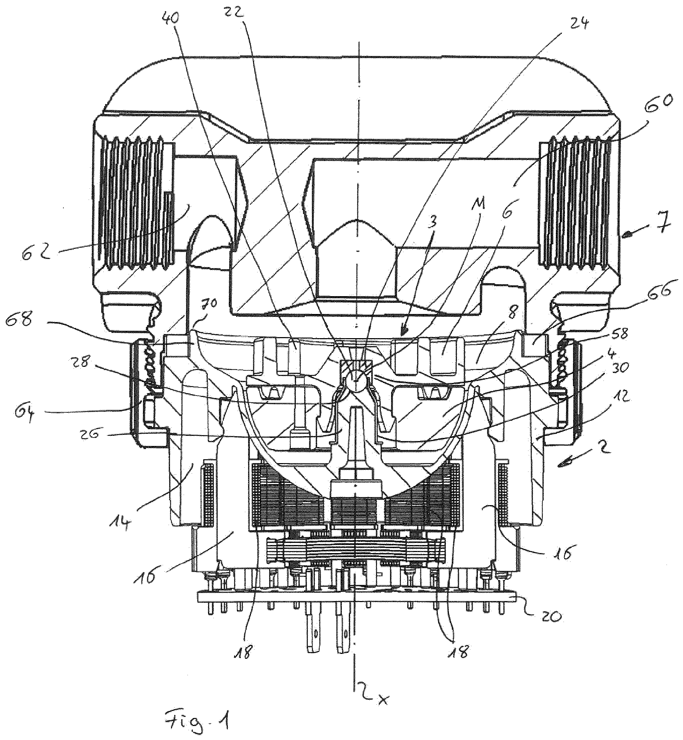

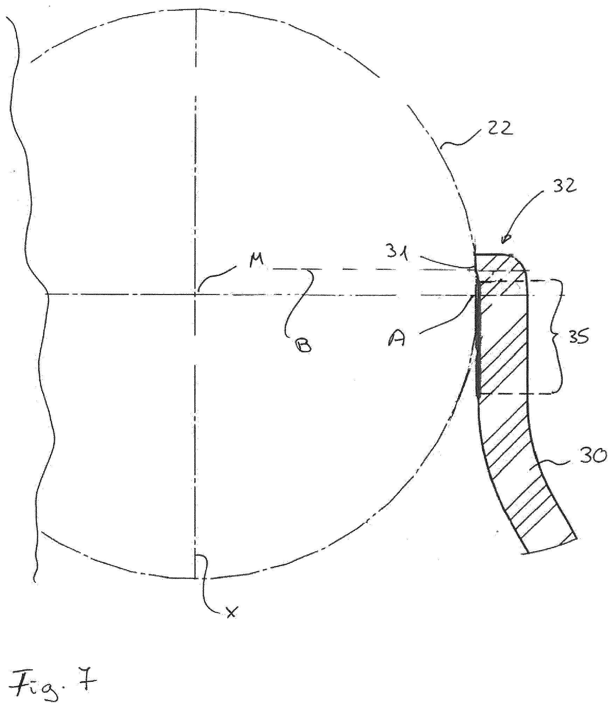

Fig. 7 eine vergrößerte Ausschnittansicht des freien Endes der Lagerhülse und der Lagerkugel Fig. 1 zeigt ein Beispiel eines erfindungsgemäßen elektrischen Pumpenaggregates in einer geschnittenen Ansicht. In der Darstellung gemäß Fig. 1 ist lediglich der elektrische Antriebsmotor 2 mit dem Rotor 4 und dem Laufrad 6 sowie einem angesetzten Pumpengehäuse 7 gezeigt. Rotor 4 und Laufrad 6 bilden eine Rotorbaugruppe 3, welche in einem Rotorraum 8 rotiert, welcher durch eine Trennkalotte 10 begrenzt wird. Der Rotorraum 8 wird an seiner der Trennkalotte 10 abgewandten Seite durch ein hier nicht gezeigtes Pumpen- bzw. Anschlussgehäuse verschlossen. In diesem nicht gezeigten Pumpengehäuse liegen die Anschlüsse für den Fluidein- und den Fluidausgang des Pumpenaggregates.

Die Trennkalotte 10 ist aus Kunststoff gefertigt, in diesem Beispiel einstückig mit dem Statorgehäuse 12. Die Trennkalotte 10 trennt den nassen Rotorraum 8, in welchem sich das zu fördernde Fluid befindet, von dem trockenen Statorraum 14, in dem die einzelnen metallischen Statorpole 16 mit den umgebenden Spulen 18 angeordnet sind. Die Spulen sind elektrisch über eine Leiterplatte 20 kontaktiert, über welche die Spulen 18 elektrisch miteinander verschaltet sind. Darüber hinaus können auf der Leiterplatte 20 elektronische Bauteile zur Ansteuerung der Spulen 18 angeordnet sein, beispielsweise ein Frequenzumrichter.

Die Trennkalotte 10 weist zumindest in ihrem den Rotor 4 umgebenden Bereich die Form eines Kugelabschnittes bzw. Kugelsegmentes auf. Der Rotor 4 ist an seinem Außenumfang korrespondierend geformt, so dass sich der Außenumfang des Rotors 4 in geringem Abstand zur Innenwandung der Trennkalotte 10 rotierend bewegen kann.

Die aus dem Rotor 4 und dem Laufrad 6 gebildete Rotorbaugruppe 3 ist zentral auf einer Lagerkugel 22 gelagert. Die Rotorbaugruppe 3 weist in ihrem Inneren eine Lagerschale 24 auf, welche sich gleitend auf der Lagerkugel 22 bewegt. Die Lagerkugel 22 ist beispielsweise aus Hartmetall gefertigt, während die Lagerschale 24 beispielsweise aus einem geeigneten Kunststoff wie Polytetrafluorethylen gefertigt sein kann. In dem so gebildeten Gleitlager wird die Schmierung von dem Fluid, welches durch das Laufrad 6 gefördert wird und sich in dem Rotorraum 8 befindet, bewirkt.

Die Lagerkugel 22 ist so angeordnet, dass ihr Mittelpunkt M auf der Drehachse x der Rotorbaugruppe 3 gelegen ist, wobei der Mittelpunkt M gleichzeitig den Mittelpunkt der sphärischen Form der Trennkalotte 10 sowie der Außenumfangsfläche des Rotors 4 bildet. Diese kugelförmige Lagerung der Rotorbaugruppe 3 ermöglicht nicht nur eine Rotation der Rotorbaugruppe 3 um die Drehachse x, sondern auch eine leichte Pendelbewegung quer zur Drehachse x.

Die Lagerkugel 22 liegt auf einem Lageträger 26 auf, welcher einstückig mit der Trennkalotte 10 aus Kunststoff gefertigt ist. Der Lagerträger 26 erstreckt sich in Richtung der Drehachse x radial nach innen in den von der Trennkalotte 10 definierten Rotorraum 8 hinein. Dabei hat der Lagerträger 26 eine säulenförmige Gestalt mit im Wesentlichen zylindrischer Außenumfangsfläche, welche sich zum freien Ende hin verjüngt. An dem freien Ende des Lagerträgers 26, welches von der Trennkalotte 10 beabstandet ist, weist der Lagerträger 26 stirnseitig eine gekrümmte Anlagefläche 28 auf, auf welcher die Lagerkugel 22 aufliegt. Die Anlagefläche 28 weist eine konkave Gestalt mit gleichem Krümmungsradius wie die Lagerkugel 22 auf, so dass eine flächige Anlage zwischen der Lagerkugel 22 und der Anlagefläche 28 gegeben ist. In diesem Ausführungsbeispiel ist das Innere des Lagerträgers 26 hohl ausgebildet, wobei der Lagerträger 26 jedoch eine größere Wandstärke als die übrige Trennkalotte 10 aufweist, um zum einen eine ausreichend hohe Biegefestigkeit in radialer Richtung bezogen auf die Drehachse x aufzuweisen, und zum anderen auch die durch die Befestigungshülse 30, welche nachfolgend beschrieben wird, verursachten Druckkräfte aufnehmen zu können.

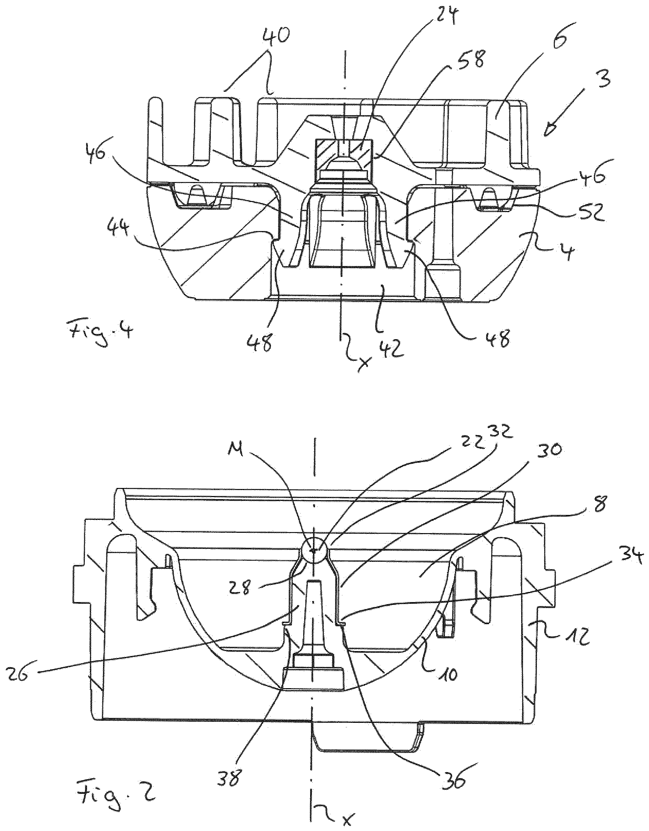

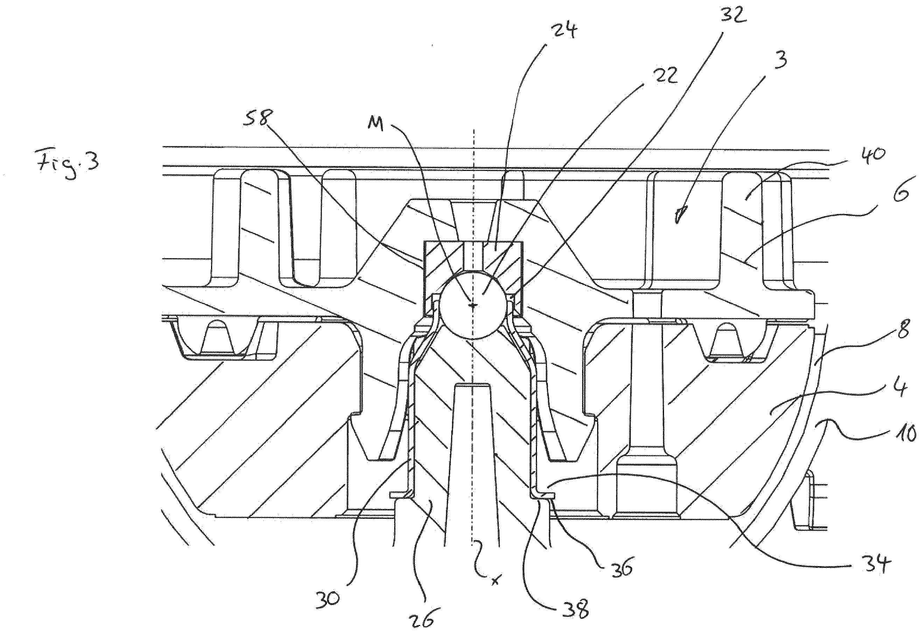

Diese Befestigungshülse 30 bildet ein Befestigungselement, welches die Lagerkugel 22 in der nachfolgend beschriebenen Weise an dem Lagerträger 26 fixiert. Die Befestigung der Lagerkugel 22 an dem Lagerträger 26 ist besonders gut in der Schnittansicht gemäß Fig. 2, welche lediglich das Statorgehäuse 12 mit der Trennkalotte 10 sowie den Lagerträger 26 mit der daran befestigten Lagerkugel 22 zeigt, sowie Fig. 3 zu sehen. Ferner ist in der Detailansicht von Fig. 7 die Klemmung der Lagerkugel 22 in der Lagerhülse 30 im Detail gezeigt. Während der Lagerträger 26 aus Kunststoff gefertigt ist, ist die Befestigungshülse 30 als Metallteil ausgebildet. Die Befestigungshülse 30 kann beispielsweise aus rostfreiem Edelstahl gefertigt sein. Vorzugsweise erfolgt eine Fertigung durch Umformen wie Tiefziehen aus einem flachen Blech. Die Befestigungshülse 30 weist eine Innenkontur auf, welche im Wesentlichen der Außenkontur des Lagerträgers 26 entspricht. An ihrem freien ersten Axialende 32 weist die Befestigungshülse 30 eine Öffnung 31 auf, in welcher die Lagerkugel 22 so gelegen ist, dass sich die Lagerkugel 22 mit einem Kugelsegment aus der Lagerhülse 30 nach außen in den Rotorraum 8 hinein erstreckt. Auf diesem freien Kugelsegment gleitet die Lagerschale 24. Der Rand der Öffnung 31 am ersten Axialende 32 der Befestigungshülse 30 übergreift den Äquator A der Lagerkugel 22. Dabei übergreift die Befestigungshülse 30 den Äquator in der Weise, dass die Lagerkugel 22 zusätzlich am Außenumfang ihres Äquators durch die umfänglich umgebende Befestigungshülse 30 geklemmt wird. Die Befestigungshülse 30 weist dazu an ihrem ersten Axialende 32, das heißt im Bereich der dort gebildeten Öffnung, einen Innendurchmesser auf, welcher derart kleiner als der Durchmesser der Lagerkugel 22 an ihrem Äquator ist, dass der Innenumfang der Öffnung 31 an eine Außenumfangslinie B der Lagerkugel 22 anliegt, welche einen kleineren Durchmesser als der Äquator A aufweist. So liegen das erste Axialende 32 und das zweite Axialende 34 der Befestigungshülse 30 an entgegengesetzten Seiten des Äquators A in Richtung der Drehachse X gesehen. Ausgehend von der Öffnung 31 weist die Befestigungshülse 30 einen im Wesentlichen zylindrischen Innenumfangsabschnitt 35 auf, welcher einen Innendurchmesser aufweist, welcher ebenfalls geringfügig kleiner als der Durchmesser der Lagerkugel 22 an deren Äquator A ist. Der Innendurchmesser des Innenumfangsabschnittes 35 ist jedoch größer als der Innendurchmesser der Öffnung 31. So wird die Lagerkugel 22 im Bereich ihres Äquators A im Inneren des Innenumfangsabschnitts 35 der Befestigungshülse 30 klemmend fixiert.

An ihrem entgegengesetzten zweiten Axialende 34 weist die Befestigungshülse 30 eine zweite Öffnung auf, durch welche der Lagerträger 26 in das Innere der Befestigungshülse 30 eindringt. Ferner ist die Befestigungshülse 30 an ihrem zweiten Axialende 34 nach außen im rechten Winkel umgebogen, so dass eine ringförmige Anlagefläche 36 gebildet wird, welche in axialer Richtung gegen eine Anlageschulter 38 am Außenumfang des Lagerträgers 26 anstößt. Die Befestigungshülse 30 ist mit ihrem zylindrischen Innenumfang auf den zylindrischen Außenumfang des Lagerträgers 26 aufgepresst, so dass eine kraftschlüssige Verbindung zwischen der Befestigungshülse 30 und dem Lagerträger 26 erzeugt wird. Dabei erzeugt die Lagerhülse 30 durch Zugspannungen in ihrem Inneren nach radial nach innen wirkende Druckkräfte, welche auf den Außenumfang des Lagerträgers 26 wirken. Die Befestigungshülse 30 ist auf dem Lagerträger 26 in axialer Richtung so weit aufgeschoben, dass die Lagerkugel 22 gegen die Anlagefläche 28 gedrückt wird und so zwischen der Anlagefläche 28 und dem den Äquator der Lagerkugel 22 umgebenden Teil der Befestigungshülse 30 spielfrei gehalten wird. So wird eine sehr einfache Fixierung der Lagerkugel 22 an dem Lagerträger 26 erreicht, durch welche eine rein mechanische Fixierung ohne thermische oder klebende Fügeverfahren erreicht werden kann. Ferner ist keine mechanische Bearbeitung der Lagerkugel 22, beispielsweise zum Einbringen von Bohrungen oder ähnlichem erforderlich. Zusätzlich oder alternativ wäre es möglich, am Außenumfang des Lagerträgers 26 eine Hinterschneidung, beispielsweise in Form einer ringförmigen Nut, auszubilden, in welchem die Befestigungshülse 30 zu ihrer Fixierung formschlüssig eingreift. Dieser Eingriff kann durch Umformen der Befestigungshülse 30 beim Aufpressen auf den Lagerträger 26 mit einem geeigneten Werkzeug erreicht werden.

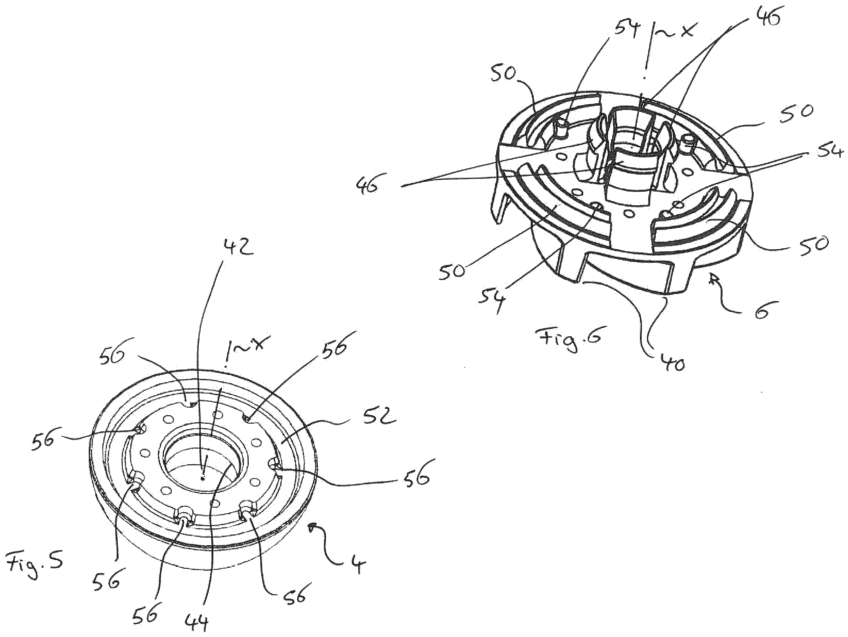

Anhand der Fig. 4 - 6 wird nun die Ausgestaltung der Rotorbaugruppe 3 beschrieben, welche auch unabhängig von der vorangehend beschriebenen Fixierung der Lagerkugel 22 verwendet werden könnte. Die Rotorbaugruppe 3 ist im Wesentlichen aus drei Teilen gebildet, nämlich dem Rotor 4, dem Laufrad 6 sowie der Lagerschale 24. Das Laufrad 6 ist als Spritzgussteil aus Kunststoff gefertigt und weist an einer ersten Axialseite in Richtung der Drehachse x die Laufradschaufeln 40 auf. An der den Laufradschaufeln 40 abgewandten Axialseite ist das Laufrad 6 mit dem Rotor 4 verbunden. Der Rotor 4 ist vorzugsweise ebenfalls als Spritzgussteil aus einem Kunststoff, welcher mit Magnetpartikeln, wie beispielsweise Ferritpartikeln versetzt ist, gebildet. Es ist vorteilhaft, den Rotor 4 unabhängig von dem Laufrad 6 zu fertigen, da so das Laufrad 6 aus einem Kunststoff ohne Magnetpartikel gefertigt werden kann. In dem Rotor 4 sind durch Magnetisierung der Magnetpartikel nach oder während des Spritzgussprozesses definiert permanentmagnetische Rotorpole ausgebildet.

Die Verbindung zwischen dem Laufrad 6 und dem Rotor 4 ist als eine Rastverbindung ausgebildet. Dazu weist der Rotor 4 eine zentrale Öffnung 42 auf, welche sich zu ihrem dem Laufrad 6 abgewandten Ende hin radial erweitert, so dass eine ringförmige Schulter 44 am Innenumfang der Öffnung 42 ausgebildet ist. Das Laufrad 6 weist an seiner dem Rotor 4 zugewandten Seite zentral vier axial vorstehende Rastzungen 46 auf, welche mit ihren radial nach außen gerichteten Rastvorsprüngen 48 die Schulter 44 hintergreifen. Zur Verbindung von Laufrad 6 und Rotor 4 werden die Rastzungen 46 von dem den Laufrad 6 zugewandten Ende des Rotors 4 in die Öffnung 42 eingeführt, wobei die Rastzungen 46 elastisch radial nach innen ausgelenkt werden und sich, sobald die Rasthaken 48 die Schulter 44 passiert haben, radial wieder nach außen bewegen.

Zur Fixierung in radialer Richtung sind an dem Laufrad an der dem Rotor 4 zugewandten Seite ringförmige Vorsprünge 50 ausgebildet, welche in eine korrespondierende Ringnut 52 an der dem Laufrad 6 zugewandten Seite des Rotors 4 eingreifen.

Um das Laufrad 6 in einer definierten Winkellage bezüglich der Drehachse x an dem Rotor 4 befestigen zu können, sind an dem Laufrad 6 ferner vier Eingriffselemente in Form von Vorsprüngen 54 ausgebildet, welche in Ausnehmungen 56 an dem Laufrad 6, welche Gegen-Eingriffselemente bilden, eingreifen können. In dem hier gezeigten Beispiel sind vier Vorsprünge 54 sowie sieben Ausnehmungen 56 vorgesehen. Die Ausnehmungen 56 liegen auf einem gemeinsamen Kreis um die Längs- Mittelachse x des Rotors 4. Die Vorsprünge 54 liegen auf einem entsprechenden Kreis um die Längs- bzw. Drehachse x des Laufrades 6. Die Anzahl und die Positionierung der Vorsprünge 54 und Ausnehmungen 56 sind so gewählt, dass es eine vorbestimmte Anzahl von Winkelpositionen gibt, in welchen das Laufrad 6 und der Rotor 4 miteinander verbunden werden können. In diesem Fall sind dies sieben mögliche Winkelpositionen, welche den Winkelpositionen der Laufradschaufeln 40 entsprechen. Dazu sind die Ausnehmungen 56 in regelmäßigen Winkelabschnitten angeordnet, während die Vorsprünge 54 in unregelmäßigen Winkelabschnitten angeordnet sind, welche so gewählt sind, dass jeder Vorsprung 54 in jeweils eine der Ausnehmungen 56 eingreift, egal in welcher der sieben möglichen Winkelpositionen das Laufrad 6 an dem Rotor 4 befestigt ist.

Zur Ausbildung der Lagerung ist in der Rotorbaugruppe 3 die Lagerschale 24 fixiert. Die Lagerschale 24 ist in einen bezüglich der Drehachse x zentralen Aufnahmeraum 58 in dem Laufrad 6 eingepresst. Der Aufnahmeraum 58 liegt in axialer Verlängerung des von den Rastzungen 46 aufgespannten Freiraumes. Die Lagerschale 24 ist vorzugsweise so ausgebildet, dass das die Lagerschale 24 ausbildende Kunststoffelement zunächst in den Aufnahmeraum 58 eingepresst und dann durch Bohren oder Fräsen dort spanend bearbeitet ist, so dass die zu der Lagerkugel 22 korrespondierenden Lagerfläche genau zentrisch im Inneren des Laufrades 6 ausgebildet wird.

Wie in Fig. 1 dargestellt, wird der Rotorraum 8 an seiner der Trennkalotte 10 abgewandten Seite durch ein Pumpengehäuse 7 verschlossen. In dem Pumpengehäuse 7 sind ein Eintrittskanal 60 und ein Austrittskanal 62 ausgebildet. Das Pumpengehäuse 7 ist mit Hilfe einer Überwurfmutter 64 an dem Statorgehäuse 12 befestigt. Die Schnittstelle zwischen dem Statorgehäuse 12 und dem Pumpengehäuse 7 ist durch eine ringförmige Dichtung 66 nach außen abgedichtet. Die ringförmige Dichtung 66 ist an dem Statorgehäuse 12 im Umfang eines ringförmigen Vorsprunges 68 gelegen und dort vorzugsweise kraftschlüssig fixiert, sodass die Dichtung 66, wenn das Pumpengehäuse 7 abgenommen wird, an dem Statorgehäuse 12 verbleibt. Der Vorsprung 68 erstreckt sich mit seinem freien Ende 70 in axialer Richtung X über die axiale Stirnseite des Laufrades 6 und auch die axiale Stirnseite der Dichtung 66 hinaus. So bildet das freie Ende 70 des Vorsprunges 68 das axiale Ende des elektrischen Antriebsmotors 2. Wenn dieser von dem Pumpengehäuse 7 getrennt wird, kann so der Antriebsmotor 2 auf das freie Ende 70 des ringförmigen Vorsprunges 68 gestellt werden, ohne dass das Laufrad 6 oder die Dichtung 66 beschädigt werden könnten.

**Bezugszeichenliste**

| | | |
|---|---|---|
| 2 | - | elektrischer Antriebsmotor |
| 3 | - | Rotorbaugruppe |
| 4 | - | Rotor |
| 6 | - | Laufrad |
| 7 | - | Pumpengehäuse |
| 8 | - | Rotorbauraum |
| 10 | - | Trennkalotte |
| 12 | - | Statorgehäuse |
| 14 | - | Statorraum |
| 16 | - | Statorpol |
| 18 | - | Spulen |
| 20 | - | Leiterplatte |
| 22 | - | Lagerkugel |
| 24 | - | Lagerschale |
| 26 | - | Lagerträger |
| 28 | - | Anlagefläche |
| 30 | - | Befestigungshülse |
| 31 | - | Öffnung am ersten Axialende |
| 32 | - | erstes Axialende |
| 34 | - | zweites Axialende |
| 35 | - | Innenumfangsabschnitt |
| 36 | - | Anlagefläche |
| 38 | - | Anlageschulter |
| 40 | - | Laufradschaufel |
| 42 | - | Öffnung |
| 44 | - | Schulter |
| 46 | - | Rastzungen |
| 48 | - | Rastvorsprünge |
| 50 | - | Vorsprünge |
| 52 | - | Ringnut |
| 54 | - | Vorsprünge, Eingriffselemente |
| 56 | - | Ausnehmungen, Gegen-Eingriffselemente |
| 58 | - | Aufnahmeraum |
| 60 | - | Eintrittskanal |
| 62 | - | Austrittskanal |
| 64 | - | Überwurfmutter |
| && | - | Dichtung |
| 68 | - | Vorsprung |
| 70 | - | freies Ende |
| A | - | Äquator |
| B | - | Umfangslinie |
| M | - | Mittelpunkt |
| x | - | Drehachse |

## Patentansprüche

1. Elektrisches Pumpenaggregat mit einem Stator (16, 18), einem Rotor (4) sowie einem mit dem Rotor verbundenen Laufrad (6), bei welchem der Stator (16, 18) und der Rotor (4) durch eine sphärische Trennkalotte (10) aus Kunststoff getrennt sind und der Rotor (4) zentral auf einer Lagerkugel (22) gelagert ist, welche auf einem sich von der Trennkalotte (10) wegerstreckenden Lagerträger (26) aufliegt und befestigt ist, **dadurch gekennzeichnet, dass** die Lagerkugel (22) an dem Lagerträger (26) durch ein die Lagerkugel (22) an deren Umfang umgreifendes und den Lagerträger (26) übergreifendes Befestigungselement (30) fixiert ist.

2. Elektrisches Pumpenaggregat nach Anspruch 1, **dadurch gekennzeichnet, dass** das Befestigungselement eine Befestigungshülse (30) ist, welche die Lagerkugel (22) und den Lagerträger (26) umfänglich umgreift.

3. Elektrisches Pumpenaggregat nach Anspruch 1 oder 2, **dadurch gekennzeichnet, dass** der Lagerträger (26) mit der Trennkalotte (10) einstückig aus Kunststoff ausgebildet ist.

4. Elektrisches Pumpenaggregat nach einem der Ansprüche 1 bis 3, **dadurch gekennzeichnet, dass** der Lagerträger (26) an seinem der Trennkalotte (10) abgewandten Axialende eine vorzugsweise konkave Anlagefläche (28) aufweist, an welcher die Lagerkugel (22) anliegt.

5. Elektrisches Pumpenaggregat nach einem der vorangehenden Ansprüche, **dadurch gekennzeichnet, dass** das Befestigungselement (30) aus Metall und vorzugsweise rostfreiem Edelstahl ist.

6. Elektrisches Pumpenaggregat nach einem der vorangehenden Ansprüche, **dadurch gekennzeichnet, dass** das Befestigungselement (30) kraftschlüssig und/oder formschlüssig an dem Lagerträger (26) fixiert ist.

7. Elektrisches Pumpenaggregat nach einem der vorangehenden Ansprüche, **dadurch gekennzeichnet, dass** das Befestigungselement (30) auf den Außenumfang des Lagerträgers (26) aufgepresst ist.

8. Elektrisches Pumpenaggregat nach einem der vorangehenden Ansprüche, **dadurch gekennzeichnet, dass** das Befestigungselement (30) den Äquator der Lagerkugel (22) um- und/oder übergreift.

9. Elektrisches Pumpenaggregat nach einem der vorangehenden Ansprüche, **dadurch gekennzeichnet, dass** der Lagerträger (26) eine Anlageschulter (38) aufweist, an welcher das Befestigungselement (30) mit seinem der Lagerkugel (22) abgewandten Axialende (34) anliegt.

10. Elektrisches Pumpenaggregat nach einem der vorangehenden Ansprüche, **dadurch gekennzeichnet, dass** der Rotor (4) aus einem Kunststoffmaterial mit eingebetteten Magnetpartikeln gefertigt ist.

11. Elektrisches Pumpenaggregat nach einem der vorangehenden Ansprüche, **dadurch gekennzeichnet, dass** das Laufrad (6) aus Kunststoff gefertigt ist.

12. Elektrisches Pumpenaggregat nach einem der vorangehenden Ansprüche, **dadurch gekennzeichnet, dass** das Laufrad (6) und der Rotor (4) durch eine Rastverbindung (44, 46, 48) miteinander verbunden sind.

13. Elektrisches Pumpenaggregat nach Anspruch 12, **dadurch gekennzeichnet, dass** an dem Laufrad (6) Eingriffselemente (54) ausgebildet sind, welche mit korrespondierenden Gegen-Eingriffselementen (56) an dem Rotor (4) in Eingriff sind zur Positionierung des Laufrades (6) in seiner Winkellage relativ zu dem Rotor (4).

14. Elektrisches Pumpenaggregat nach Anspruch 13, **dadurch gekennzeichnet, dass** die Anzahlen und die Positionierung der Eingriffselemente (54) und Gegen-Eingriffselemente (56) derart sind, dass sie eine vorgegebene Zahl von möglichen Winkelpositionen definieren, in welchen das Laufrad (6) und der Rotor (4) relativ zueinander positionierbar sind, wobei vorzugsweise die Zahl der möglichen Winkelpositionen der Anzahl von Schaufeln (40) des Laufrades (6) entspricht.

15. Elektrisches Pumpenaggregat nach einem der vorangehenden Ansprüche, **dadurch gekennzeichnet, dass** in einer zentralen Ausnehmung (58) des Rotors (4) eine Lagerschale (24) angeordnet und vorzugsweise eingepresst ist, welche auf der Lagerkugel (22) gleitet.

## Claims

1. An electrical pump assembly with a stator (16, 18), with a rotor (4) as well as with an impeller (6) which is connected to the rotor, with which the stator (16, 18) and the rotor (4) are separated by a spherical separating cap (10) made of plastic, and the rotor (4) is mounted centrally on a bearing ball (22), which lies on and is fastened on a bearing carrier (26) which extends away from the separating cap (10), **characterised in that** the bearing ball (22) is fixed on the bearing carrier (26) by a fastening element (30) which embraces the bearing ball (22) at its periphery and engages over the bearing carrier (26).

2. An electrical pump assembly according to claim 1, **characterised in that** the fastening element is a fastening sleeve (30) which peripherally embraces the bearing ball (22) and the bearing carrier (26).

3. An electrical pump assembly according to claim 1 or2, **characterised in that** the bearing carrier (26) is designed with the separating cap (10) as one piece of plastic.

4. An electrical pump assembly according to one of the claims 1 to 3, **characterised in that** the bearing carrier (26) at its axial end which is away from the separating cap (10) comprises a preferably concave contact surface (28), on which the bearing ball (22) bears.

5. An electric pump assembly according to one of the preceding claims, **characterised in that** the fastening element (30) is of metal and preferably of rust-free stainless steel.

6. An electric pump assembly according to one of the preceding claims, **characterised in that** the fastening element (30) is non-positively and/or positively fixed on the bearing carrier (26).

7. An electric pump assembly according to one of the preceding claims, **characterised in that** the fastening element (30) is pressed onto the outer periphery of the bearing carrier (26).

8. An electric pump assembly according to one of the preceding claims, **characterised in that** the fastening element (30) embraces and/or engages over the equator of the bearing ball (22).

9. An electric pump assembly according to one of the preceding claims, **characterised in that** the bearing carrier (26) comprises a contact shoulder (38), on which the fastening element (30) bears with its axial end (34) which is away from the bearing ball (22).

10. An electric pump assembly according to one of the preceding claims, **characterised in that** the rotor (4) is manufactured of a plastic material with embedded magnet particles.

11. An electric pump assembly according to one of the preceding claims, **characterised in that** the impeller (6) is manufactured of plastic.

12. An electric pump assembly according to one of the preceding claims, **characterised in that** the impeller (6) and the rotor (4) are connected to one another by a detent connection (44, 46, 48).

13. An electrical pump assembly according to claim 12, **characterised in that** engagement elements (54) are formed on the impeller (6) and are engaged with corresponding counter-engagement elements (56) on the rotor (4), for positioning the impeller (6) in its angular position relative to the rotor (4).

14. An electric pump assembly according to claim 13, **characterised in that** the numbers and the positioning of the engagement element (54) and the counter-engagement elements (56) are such that they define a given number of possible angular positions, in which the impeller (6) and the rotor (4) are positionable relative to one another, wherein preferably the number of possible angular positions corresponds to the number of blades (40) of the impeller (6).

15. An electric pump assembly according to one of the preceding claims, **characterised in that** a bearing shell (24) is arranged and preferably pressed in a central recess (58) of the rotor (4) and slides on the bearing ball (22).

## Revendications

1. Groupe motopompe électrique comportant un stator (16, 18), un rotor (4) et une roue à aubes (6) reliée au rotor, dans lequel le stator (16, 18) et le rotor (4) sont séparés par une calotte de séparation (10) sphérique en plastique et le rotor (4) est monté de manière centrale sur une bille de roulement (22) qui repose et est fixée sur un support de roulement (26) s'étendant à partir de la calotte de séparation (10), **caractérisé en ce que** la bille de roulement (22) est fixée au niveau du support de roulement (26) par un élément de fixation (30) entourant la bille de roulement (22) au niveau de sa circonférence et chevauchant le support de roulement (26).

2. Groupe motopompe électrique selon la revendication 1, **caractérisé en ce que** l'élément de fixation est un manchon de fixation (30) qui entoure de manière circonférentielle la bille de roulement (22) et le support de roulement (26).

3. Groupe motopompe électrique selon la revendication 1 ou 2, **caractérisé en ce que** le support de roulement (26) est réalisé en matière plastique d'un seul tenant avec la calotte de séparation (10).

4. Groupe motopompe électrique selon l'une des revendications 1 à 3, **caractérisé en ce que** le support de roulement (26) présente au niveau de son extrémité axiale opposée à la calotte de séparation (10) une surface d'appui (28), de préférence concave, sur laquelle repose la bille de roulement (22).

5. Groupe motopompe électrique selon l'une des revendications précédentes, **caractérisé en ce que** l'élément de fixation (30) est en métal, et de préférence en acier inoxydable.

6. Groupe motopompe électrique selon l'une des revendications précédentes, **caractérisé en ce que** l'élément de fixation (30) est fixé au niveau du support de roulement (26) par complémentarité de force et/ou de forme.

7. Groupe motopompe électrique selon l'une des revendications précédentes, **caractérisé en ce que** l'élément de fixation (30) est pressé sur la circonférence extérieure du support de roulement (26).

8. Groupe motopompe électrique selon l'une des revendications précédentes, **caractérisé en ce que** l'élément de fixation (30) entoure et/ou chevauche l'équateur de la bille de roulement (22).

9. Groupe motopompe électrique selon l'une des revendications précédentes, **caractérisé en ce que** le support de roulement (26) présente un épaulement d'appui (38) sur lequel repose l'élément de fixation (30) par son extrémité axiale (34) opposée à la bille de roulement (22).

10. Groupe motopompe électrique selon l'une des revendications précédentes, **caractérisé en ce que** le rotor (4) est fabriqué en matière plastique avec des particules magnétiques intégrées.

11. Groupe motopompe électrique selon l'une des revendications précédentes, **caractérisé en ce que** la roue à aubes (6) est réalisée en matière plastique.

12. Groupe motopompe électrique selon l'une des revendications précédentes, **caractérisé en ce que** la roue à aubes (6) et le rotor (4) sont reliés l'un à l'autre par une liaison par encliquetage (44, 46, 48).

13. Groupe motopompe électrique selon la revendication 12, **caractérisé en ce qu'**au niveau de la roue à aubes (6) sont formés des éléments de mise en prise (54), qui sont en prise au niveau du rotor (4) avec des contre-éléments de mise en prise (56) correspondants afin de positionner la roue à aubes (6) dans sa position angulaire par rapport au rotor (4).

14. Groupe motopompe électrique selon la revendication 13, **caractérisé en ce que** le nombre et le positionnement des éléments de mise en prise (54) et des contre-éléments de mise en prise (56) sont tels qu'ils définissent un nombre prédéterminé de positions angulaires possibles au sein desquelles la roue à aubes (6) et le rotor (4) peuvent être positionnés l'un par rapport à l'autre, dans lequel le nombre des positions angulaires possibles correspond de manière préférée au nombre d'aubes (40) de la roue à aubes (6).

15. Groupe motopompe électrique selon l'une des revendications précédentes, **caractérisé en ce qu'**une coquille de coussinet (24) glissant sur la bille de roulement (22) est agencée, de préférence enfoncée, dans un évidement central (58) du rotor (4).
